(19) Europäisches Patentamt / European Patent Office / Office européen des brevets

(11) **EP 4 099 430 A1**

(12) **EUROPEAN PATENT APPLICATION**
published in accordance with Art. 153(4) EPC

(43) Date of publication:
**07.12.2022 Bulletin 2022/49**

(21) Application number: **21746914.7**

(22) Date of filing: **18.01.2021**

(51) International Patent Classification (IPC):
**H01M 4/131** $^{(2010.01)}$ **H01M 4/525** $^{(2010.01)}$
**H01M 4/66** $^{(2006.01)}$

(52) Cooperative Patent Classification (CPC):
**H01M 4/131; H01M 4/525; H01M 4/66;** Y02E 60/10

(86) International application number:
**PCT/JP2021/001386**

(87) International publication number:
**WO 2021/153290 (05.08.2021 Gazette 2021/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.01.2020 JP 2020015152**

(71) Applicant: **Panasonic Holdings Corporation**
**Osaka 571-8501 (JP)**

(72) Inventors:
• **SHIMAMURA, Harunari**
  **Chuo-ku, Osaka-shi, Osaka 540-6207 (JP)**
• **OHARA, Keisuke**
  **Chuo-ku, Osaka-shi, Osaka 540-6207 (JP)**
• **FUKUMOTO, Yusuke**
  **Chuo-ku, Osaka-shi, Osaka 540-6207 (JP)**

(74) Representative: **Novagraaf International SA**
**Chemin de l'Echo 3**
**1213 Onex, Geneva (CH)**

(54) **POSITIVE ELECTRODE FOR NONAQUEOUS ELECTROLYTE SECONDARY BATTERIES, AND NONAQUEOUS ELECTROLYTE SECONDARY BATTERY**

(57) This positive electrode for nonaqueous electrolyte secondary batteries is provided with a positive electrode core body and a positive electrode mixture layer that is formed on the surface of the positive electrode core body. The positive electrode mixture layer contains a positive electrode active material that is mainly composed of a lithium transition metal composite oxide which contains 70% by mole or more of Ni relative to the total number of moles of the metal elements excluding Li. In addition, the positive electrode core body has a thermal conductivity X of from 50 to 155 W/m·K (25°C). It is preferable that the upper limit Y1 and the lower limit Y2 of the median value Y in the circularity distribution of the lithium transition metal composite oxide relative to the thermal conductivity X of the core body respectively satisfy the conditions of formula (1) and formula (2) described below. Formula (1): Y1 = 0.9322(X-0.987) Formula (2): Y2 = 0.1613(X-0.746) - 0.0005

Figure 4

CIRCULARITY OF POSITIVE ELECTRODE ACTIVE MATERIAL TO THERMAL CONDUCTIVITY OF POSITIVE ELECTRODE CORE

$Y1 = 0.9322X^{-0.987}$

$Y2 = 0.1613X^{-0.746} - 0.0005$

THERMAL CONDUCTIVITY OF POSITIVE ELECTRODE CORE (W/m·K [25°C])

## Description

TECHNICAL FIELD

The present disclosure generally relates to a positive electrode for a non-aqueous electrolyte secondary battery and a non-aqueous electrolyte secondary battery using the positive electrode.

BACKGROUND ART

A positive electrode of a non-aqueous electrolyte secondary battery comprises a positive electrode core and a positive electrode mixture layer formed on a surface of the positive electrode core. In the non-aqueous electrolyte secondary battery, the positive electrode core and a negative electrode are contacted in some cases due to, for example, entering of a conductive foreign matter, piercing of a nail, and the like to cause a low-resistant internal short-circuit through which large current passes, and a large amount of heat (Joule heat generation) is generated. This heat transmitted to a positive electrode active material may decompose the active material to generate oxygen, which oxidatively reacted with active lithium in a negative electrode active material, leading to chained heat generation called thermal runaway. Such heat generation can be a problem particularly in a battery with high energy density.

Regarding the above circumstance, various means are employed to inhibit the heat generation with abnormality in the non-aqueous electrolyte secondary battery. For example, Patent Literature 1 proposes a non-aqueous electrolyte secondary battery comprising a positive electrode core in which an average composition obtained by averaging rates of elements constituting a positive electrode core in the thickness direction of the core is set to be equal to a composition of an alloy having a liquidus temperature of 630°C or lower, that is, the positive electrode core melts at a temperature of 630°C or lower. Patent Literature 1 describes that when an internal short-circuit occurs to generate heat, the core melts and shrinks at this portion to resolve the internal short-circuit, and thereby the heat generation with the internal short-circuit may be inhibited.

CITATION LIST

PATENT LITERATURE

PATENT LITERATURE 1: Japanese Patent Publication No. 4953631

SUMMARY

As disclosed in Patent Literature 1, lowering the melting point of the positive electrode core is expected to allow the core to quickly melt at the short-circuit portion to resolve the internal short-circuit. However, it is concerned that heat at the short-circuit portion is transmitted to the positive electrode active material to decompose the active material before the core melts, leading to the thermal runaway.

A positive electrode for a non-aqueous electrolyte secondary battery according to the present disclosure is a positive electrode comprising: a core; and a mixture layer formed on a surface of the core, wherein the mixture layer includes a positive electrode active material containing, as a main component, a lithium-transition metal composite oxide in which the proportion of Ni based on the total number of moles of metal elements excluding Li is 70 mol% or more; and the core has a thermal conductivity X of 50 to 155 W/m·K (25°C).

In the positive electrode for a non-aqueous electrolyte secondary battery according to the present disclosure, an upper limit Y1 and a lower limit Y2 of a median value Y in a circularity distribution of the lithium-transition metal composite oxide with respect to the thermal conductivity X of the core preferably satisfy conditions of the following (Formula 1) and (Formula 2), respectively.

$$\text{(Formula 1) } Y1 = 0.9322(X^{-0.987})$$

$$\text{(Formula 2) } Y2 = 0.1613(X^{-0.746}) - 0.0005$$

A non-aqueous electrolyte secondary battery according to the present disclosure comprises: the above positive electrode; a negative electrode; a separator interposed between the positive electrode and the negative electrode; and a non-aqueous electrolyte.

The positive electrode according to the present disclosure may more highly inhibit the heat generation of the battery when an internal short-circuit occurs. In the non-aqueous electrolyte secondary battery using the positive electrode according to the present disclosure, even with the internal short-circuit due to, for example, nail piercing and the like, decomposition of the positive electrode active material and expansion of the short-circuit portion hardly occur, and progress to the thermal runaway may be sufficiently prevented.

BRIEF DESCRIPTION OF DRAWINGS

FIG. 1 is a perspective view illustrating an appearance of a non-aqueous electrolyte secondary battery of an example of an embodiment.
FIG. 2 is a perspective view of an electrode assembly of an example of an embodiment.
FIG. 3A is a cross-sectional view of a positive electrode of an example of an embodiment, which illustrates a state of piercing of a nail.
FIG. 3B is a cross-sectional view of a positive electrode of an example of an embodiment, which illustrates a state of piercing of a nail.
FIG. 4 is a graph indicating a relationship between a thermal conductivity of a positive electrode core and a circularity of a positive electrode active material, which affect heat generation with an internal short-circuit in a non-aqueous electrolyte secondary battery.

DESCRIPTION OF EMBODIMENTS

As above, it is an important challenge to inhibit decomposition of the positive electrode active material and expansion of the short-circuit portion to prevent progress to the thermal runaway when the internal short-circuit occurs due to, nail piercing and the like. In particular, a battery using a positive electrode active material with a high Ni content is likely to generate more heat with the internal short-circuit, and thereby the thermal runaway is required to be more certainly prevented. The present inventors have intensively investigated the above problem, and as a result, have ascertained that a thermal conductivity of the positive electrode core significantly affects the heat generation of the battery. Then, the present inventors have found that setting the thermal conductivity of the positive electrode core within a range of 50 to 155 W/m·K (25°C) may remarkably inhibit the heat generation of the battery with the internal short-circuit without impairing battery performance such as input-output characteristics.
In the non-aqueous electrolyte secondary battery using the positive electrode according to the present disclosure, using the positive electrode core having the thermal conductivity within the above range fuses the positive electrode core before the heat at the short-circuit portion is transmitted to the positive electrode active material to vigorously decompose the active material. Accordingly, it is considered that a current pathway between the positive electrode core and the negative electrode is cut off to prevent the progress to the thermal runaway. From the investigation by the present inventors, embedding the positive electrode active material into the positive electrode core as well as the thermal conductivity of the positive electrode core are found to largely affect the above fusing of the positive electrode core. Since a degree of embedding the positive electrode active material may be adjusted by regulating a circularity of the active material, regulating the circularity of the positive electrode active material as well as the thermal conductivity of the positive electrode core based on the (Formula 1) and (Formula 2) within an appropriate range may remarkably inhibit the heat generation of the battery with the internal short-circuit.
Hereinafter, an example of an embodiment of a positive electrode for a non-aqueous electrolyte secondary battery according to the present disclosure and a non-aqueous electrolyte secondary battery using the positive electrode will be described in detail with reference to the drawings. It is anticipated in advance to selectively combine a plurality of embodiments and modified examples described below.

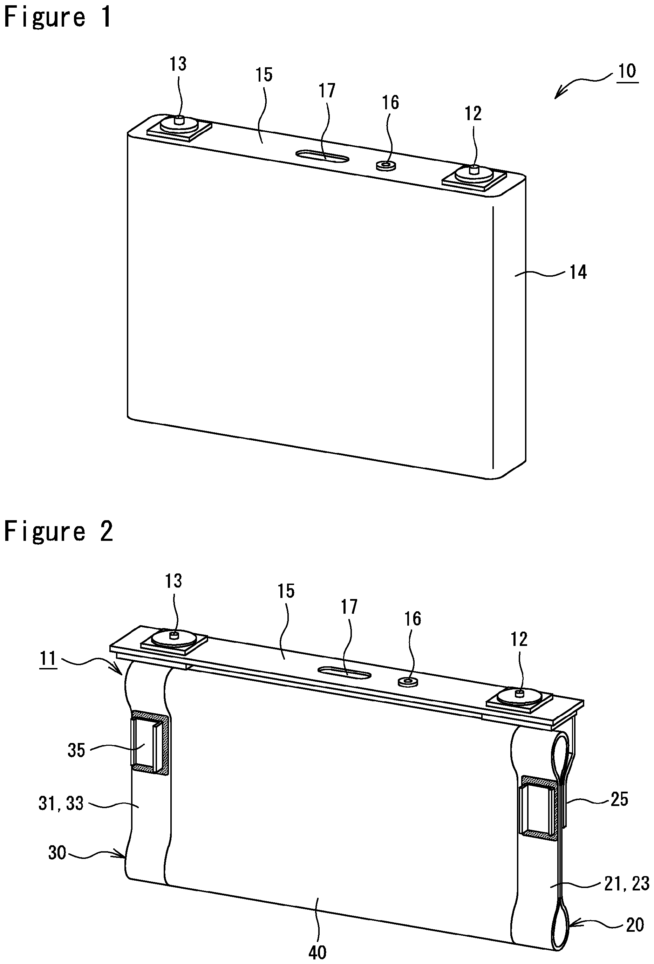

FIG. 1 is a perspective view illustrating an appearance of a non-aqueous electrolyte secondary battery 10 of an example of an embodiment. FIG. 2 is a perspective view of an electrode assembly 11 constituting the non-aqueous electrolyte secondary battery 10. The non-aqueous electrolyte secondary battery 10 illustrated in FIG. 1 comprises a bottomed rectangular-cylindrical outer housing can 14 as an outer housing body, but the outer housing body is not limited thereto. The non-aqueous electrolyte secondary battery according to the present disclosure may be, for example, a cylindrical battery comprising a bottomed cylindrical outer housing can, a coin battery comprising a coin-shaped outer housing can, or a laminate battery comprising an outer housing body constituted with a laminated sheet including a metal layer and a resin layer.
As illustrated in FIG. 1 and FIG. 2, the non-aqueous electrolyte secondary battery 10 comprises: the electrode assembly 11; a non-aqueous electrolyte; the bottomed rectangular-cylindrical outer housing can 14 housing the electrode assembly 11 and the non-aqueous electrolyte; and a sealing plate 15 sealing an opening of the outer housing can 14.

The non-aqueous electrolyte secondary battery 10 is a so-called rectangular battery. The electrode assembly 11 has a wound structure in that a positive electrode 20 and a negative electrode 30 are wound with a separator 40 interposed therebetween. Any of the positive electrode 20, the negative electrode 30, and the separator 40 is a band-shaped elongate body, and the positive electrode 20 and the negative electrode 30 are wound with the separator 40 interposed therebetween. The electrode assembly may be a stacked electrode assembly in which a plurality of positive electrodes and a plurality of negative electrodes are alternately stacked one by one with a separator interposed therebetween.

The non-aqueous electrolyte secondary battery 10 comprises: a positive electrode terminal 12 electrically connected to the positive electrode 20 with a positive electrode current collector 25 interposed therebetween; and a negative electrode terminal 13 electrically connected to the negative electrode 30 with a negative electrode current collector 35 interposed therebetween. In the present embodiment, the sealing plate 15 has an elongate rectangular shape, and the positive electrode terminal 12 is disposed on one end side in the longitudinal direction of the sealing plate 15, and the negative electrode terminal 13 is disposed on the other end side in the longitudinal direction of the sealing plate 15. The positive electrode terminal 12 and the negative electrode terminal 13 are external connection terminals to be electrically connected to another non-aqueous electrolyte secondary battery 10, each electronic device, and the like, and attached to the sealing plate 15 with an insulating member interposed therebetween.

Hereinafter, for convenience of description, the height direction of the outer housing can 14 will be described as "the upper-lower direction" of the non-aqueous electrolyte secondary battery 10, the sealing plate 15 side will be described as "the upper side", and the bottom side of the outer housing can 14 will be described as "the lower side". The direction along the longitudinal direction of the sealing plate 15 will be described as "the lateral direction" of the non-aqueous electrolyte secondary battery 10.

The outer housing can 14 is a bottomed rectangular-cylindrical metal container. An opening formed on the upper end of the outer housing can 14 is sealed by, for example, welding the sealing plate 15 with an edge part of the opening. Provided on the sealing plate 15 are typically a liquid injecting part 16 for injecting the non-aqueous electrolyte liquid, a gas discharging vent 17 to open and discharge gas with abnormality in battery, and a current-cutting mechanism. The outer housing can 14 and the sealing plate 15 are constituted with, for example, a metal material mainly composed of aluminum.

The electrode assembly 11 is a flat, wound electrode assembly including a flat part and a pair of curved parts. The electrode assembly 11 is housed in the outer housing can 14 in a state where the winding axial direction is along the lateral direction of the outer housing can 14, and the width direction of the electrode assembly 11 with aligning the pair of the curved parts is along the height direction of the battery. In the present embodiment, a current collecting part on the positive electrode side in which a core exposed part 23 of the positive electrode 20 is stacked is formed on one end part in the axial direction of the electrode assembly 11, and a current collecting part on the negative electrode side in which a core exposed part 33 of the negative electrode 30 is stacked is formed on the other end part in the axial direction. Each current collecting part is electrically connected to a terminal with a current collector interposed therebetween. An insulating electrode assembly holder (insulating sheet) may be interposed between the electrode assembly 11 and an internal surface of the outer housing can 14.

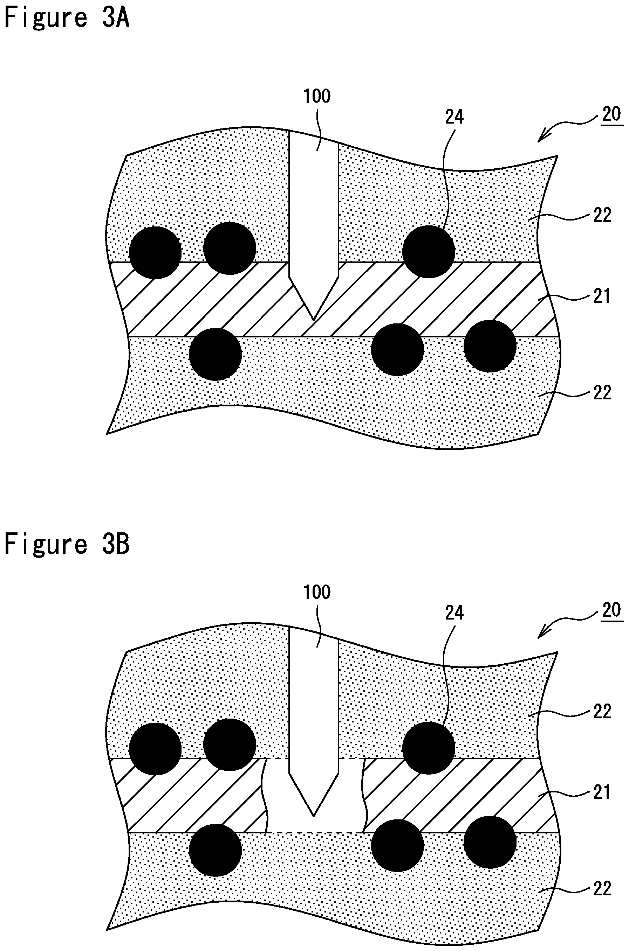

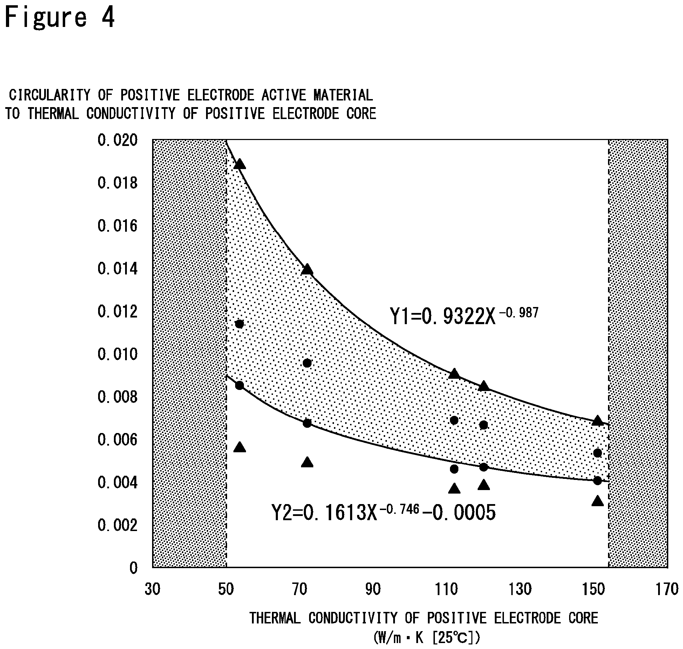

Hereinafter, the electrode assembly 11, particularly the positive electrode 20 will be described in detail appropriately with reference to FIG. 3A, FIG. 3B, and FIG. 4. FIG. 3A and FIG. 3B are cross-sectional views of the positive electrode 20, which illustrate a state of piercing of a nail. Although FIG. 3A and FIG. 3B illustrate only six particles of the positive electrode active material 24 for convenience of description, many particles are actually filled to constitute the positive electrode mixture layer 22. FIG. 4 is a graph indicating a relationship between a thermal conductivity of the positive electrode core 21 and a circularity of the positive electrode active material 24, which affect heat generation with an internal short-circuit.

[Positive Electrode]

As illustrated in FIG. 3A and FIG. 3B, the positive electrode 20 has a positive electrode core 21 and a positive electrode mixture layer 22 formed on a surface of the positive electrode core 21. The positive electrode core 21 is constituted with a foil of a metal mainly composed of, for example, Al, Mg, and the like. The positive electrode mixture layer 22 includes the positive electrode active material 24, a conductive agent, and a binder, and is preferably provided on both surfaces of the positive electrode core 21. The positive electrode 20 may be produced by, for example, applying a positive electrode mixture slurry including the positive electrode active material 24, the conductive agent, the binder, and the like on the positive electrode core 21, drying and subsequently compressing the applied film to form the positive electrode mixture layers on both the surfaces of the positive electrode core 21.

For the positive electrode core 21, a metal foil having a thermal conductivity X of 50 to 155 W/m·K (25°C) is used. When the thermal conductivity X of the positive electrode core 21 is more than 155 W/m·K, the positive electrode core 21 hardly fuses at the short-circuit portion, and as a result, the heat is transmitted to the positive electrode active material 24 to decompose the active material, and the heat generation of the battery increases. On the other hand, when the thermal conductivity X is less than 50 W/m·K, an electrode resistance largely increases to deteriorate the input-output characteristics of the battery. That is, the heat generation of the battery with the internal short-circuit may be remarkably inhibited without impairing the battery performance such as the input-output characteristics only when the positive electrode core 21 having a thermal conductivity X within a range of 50 to 155 W/m·K is used.

The positive electrode core 21 is any metal foil satisfying the above condition of the thermal conductivity X, and constituted with a metal foil composed of an alloy containing various metal elements such as, for example, Al, Mn, Cu, Mg, Zr, Si, Cr, Ti, Fe, and Ni. An example of preferable metal foils is a metal foil composed of an Al-Mg-based alloy mainly composed Al or Mg (for example, a solid solution of Al and Mg and a solid solution of Al and Mg partially containing $Al_3Mg_2$). The main component herein means a component having the highest mass rate. In a positive electrode core 21 containing Al, the Al content may be 5 to 95 mass%. In a positive electrode core 21 containing Mg, the Mg content may be 1.5 to 90 mass%. The positive electrode core 21 is constituted with a metal foil containing, for example, Al and Mg, and further containing another metal element.

The thermal conductivity X of the positive electrode core 21 is 50 to 155 W/m·K (25°C), as above. When the inhibition of the heat generation with the internal short-circuit is considered more important, the thermal conductivity X is preferably 150 W/m·K or less, more preferably 130 W/m·K or less, and particularly preferably 100 W/m·K or less. The thermal conductivity X of the positive electrode core 21 may be regulated by changing a ratio of the metal elements constituting the metal foil, for example, the ratio between Al and Mg. The thickness of the positive electrode core 21 is not particularly limited, and an example of a preferable thickness is 5 to 20 μm or 8 to 15 μm.

The positive electrode active material 24 contains, as a main component, a lithium-transition metal composite oxide in which the proportion of Ni based on the total number of moles of metal elements excluding Li is 70 mol% or more. Using the lithium-transition metal composite oxide having the Ni content rate of 70 mol% or more, which has high energy density, as a main component of the positive electrode active material 24 may allow the battery to have higher capacity. The Ni content rate is, for example 70 to 95 mol% based on the total number of moles of metal elements excluding Li. The positive electrode active material 24 may be constituted with only the above composite oxide, and may include a composite oxide having a Ni content of less than 70 mol% within a range in that an object of the present disclosure is not impaired.

The lithium-transition metal composite oxide may contain an element other than Li and Ni. Examples of the other element include Co, Mn, Al, Zr, W, Si, Mg, P, B, Ti, Mo, Sc, Y, Fe, Cu, Zn, Cr, and Pb. Among them, at least one of Co and Mn is preferably contained, and Al, W, Zr, B, and the like may be contained in addition thereto. An example of a preferable lithium-transition metal composite oxide is an NCA-based composite oxide containing Ni, Co, and Al, and an NCM-based composite oxide containing Ni, Co, and Mn.

A median diameter (D50) on a volumetric basis of the lithium-transition metal composite oxide is, for example, 1 to 30 μm, and preferably 5 to 15 μm. The D50 of the lithium-transition metal composite oxide is measured by using a laser diffraction/scattering-type particle size distribution measuring device (LA960, manufactured by HORIBA, Ltd.) with water as a dispersion medium. A median value of a circularity of the lithium-transition metal composite oxide is, for example, 0.30 or higher, preferably 0.40 or higher, and more preferably 0.45 or higher. The median value of the circularity is less than 1. The circularity of the lithium-transition metal composite oxide is measured by using a wet flow-type particle size/shape analyzer (FPIA3000, manufactured by SYSMEX CORPORATION) with water as a dispersion medium.

As illustrated in FIG. 3A and FIG. 3B, a part of the positive electrode active material 24 is embedded into the positive electrode core 21. A degree of this embedding affects fuse property of the positive electrode core 21. A larger amount of the positive electrode active material 24 embedded into the positive electrode core 21 and a deeper embedding depth allow the positive electrode core 21 to more easily fuse at the short-circuit portion with the internal short-circuit in the battery. Since the positive electrode core 21 into which the positive electrode active material is embedded is thinned at this portion, heat generation required for fusing is reduced to facilitate the fuse. The degree of embedding the positive electrode active material 24 into the positive electrode core 21 is significantly affected by the circularity of the positive electrode active material 24 (lithium-transition metal composite oxide). In typical, the higher the circularity, the higher the degree of embedding.

That is, for the fuse property of the positive electrode core 21 and the inhibition of the heat generation with the internal short-circuit, the thermal conductivity X of the positive electrode core 21 and the circularity of the positive electrode active material 24 become important factors. As exemplified in FIG. 3A, when the nail 100 pierces the electrode assembly 11 and the positive electrode core 21 and the negative electrode 30 are electrically contacted, large current passes to generate Joule heat. When this heat is transmitted to the positive electrode mixture layer 22 through the positive electrode core 21, the positive electrode active material 24 may be decomposed to cause the thermal runaway. In the present embodiment, however, as exemplified in FIG. 3B, the positive electrode core 21 quickly fuses before the heat at the short-circuit portion is transmitted to the positive electrode active material 24 to vigorously decompose the active material. Accordingly, it is considered that a current pathway between the positive electrode core 21 and the negative electrode 30 is cut off to remarkably inhibit the heat generation of the battery.

As indicated in FIG. 4, an upper limit Y1 and a lower limit Y2 of the median value in a circularity distribution of the lithium-transition metal composite oxide with respect to the thermal conductivity X of the positive electrode core 21 preferably satisfy conditions of the following (Formula 1) and (Formula 2), respectively.

$$(\text{Formula 1}) \quad Y1 = 0.9322(X^{-0.987})$$

$$(\text{Formula 2}) \quad Y2 = 0.1613(X^{-0.746}) - 0.0005$$

In the relationship with the thermal conductivity X of the positive electrode core 21, regulating the median value of the circularity of the lithium-transition metal composite oxide so as to satisfy the conditions of (Formula 1) and (Formula 2) improves the fuse property of the positive electrode core 21 at the short-circuit portion to more remarkably inhibit the heat generation of the battery.

For example, the lithium-transition metal composite oxide includes: a composite oxide composed of secondary particles each formed by aggregation of primary particles a1 (hereinafter, referred to as "lithium-transition metal composite oxide A"); and a composite oxide composed of single particles each constituted by one primary particle b1 or constituted by aggregation of not more than five primary particles b1 (hereinafter, referred to as "lithium-transition metal composite oxide B"). The primary particles a1 constituting the lithium-transition metal composite oxide A have smaller particle diameter than the primary particles b1 constituting the lithium-transition metal composite oxide B. For example, a particle diameter of the primary particles b1 is 3 to 5 $\mu$m, and a particle diameter of the primary particles a1 is 0.3 to 0.9 $\mu$m.

The particle diameter of the primary particles of the lithium-transition metal composite oxide is measured by embedding the positive electrode 20 into a resin, producing a cross section of the positive electrode 20 with a cross section polisher (CP) process and the like, and on this cross section, observing the cross section of the positive electrode mixture layer 22 with a scanning electron microscope (SEM). Then, 20 primary particles are randomly selected from the cross-sectional SEM image. A particle boundary of the selected 20 primary particles is observed for identifying the shapes of the primary particles to determine each major diameter of the 20 primary particles, and an average value thereof is specified as the particle diameter of the primary particles. The secondary particles of the lithium-transition metal composite oxide A are constituted with, for example, 100 to 500000 primary particles a1 per secondary particle.

The mass ratio between the lithium-transition metal composite oxide B, which is of single particles, and the lithium-transition metal composite oxide A, which is of secondary particles, is, for example, 2:8 to 6:4, and preferably 7:3 to 5:5. The lithium-transition metal composite oxide may be constituted with only one of the lithium-transition metal composite oxides A and B. For example, the lithium-transition metal composite oxide may be constituted with only the lithium-transition metal composite oxide B being of single particles including first single particles having a circularity of 0.9 or higher and second single particles having a circularity of lower than 0.9. In this case, the mass ratio between the first single particles and the second single particles is, for example, 2:8 to 6:4.

The lithium-transition metal composite oxide is typically manufactured by: a raw material mixing step of mixing a composite oxide containing transition metal elements such as Ni and a lithium compound to obtain a raw material mixture; and a calcining step of calcining the raw material mixture to obtain particles of a lithium composite oxide containing Ni. The particle diameters of the primary particles and secondary particles, and circularity of the lithium-transition metal composite oxide are regulated by, for example, regulating a mixing ratio of each raw material in the raw material mixing step.

When the lithium-transition metal composite oxide A is manufactured, the mixing ratio between the Ni-Mn-containing composite oxide and the lithium compound is adjusted within a range of, for example, the metal elements in the Ni-Mn-containing composite oxide : Li being 1.0:1.0 to 1.0:1.2 at a molar ratio. On the other hand, when the lithium-transition metal composite oxide B is manufactured, the mixing ratio between the Ni-Mn-containing composite oxide and the lithium compound is adjusted within a range of, for example, the metal elements in the Ni-Mn-containing composite oxide : Li being 1.0:1.0 to 1.0:1.3 at a molar ratio.

The particle diameters of the primary particles and secondary particles, and circularity of the lithium-transition metal composite oxide may also be regulated by adjusting a calcining temperature in the calcining step. When the lithium-transition metal composite oxide A is manufactured, the calcining temperature is set to be within a range of, for example, 700°C to 1100°C. A calcining time in this case is preferably 1 to 48 hours. On the other hand, when the lithium-transition metal composite oxide B is manufactured, the calcining temperature is set to be within a range of, for example, 800°C to 1100°C. A calcining time in this case is preferably 1 to 48 hours.

The circularity of the positive electrode active material may also be regulated by a sphericalizing treatment of the lithium-transition metal composite oxide. For the sphericalizing treatment, KRYPTRON treatment (EARTHTECHNICA CO., LTD.), jet mill treatment (HOSOKAWA MICRON CORPORATION), and Faculty treatment (HOSOKAWA MICRON CORPORATION) may be used, for example.

Examples of the conductive agent included in the positive electrode mixture layer 22 may include a carbon material such as carbon black, acetylene black, Ketjenblack, and graphite. Examples of the binder included in the positive electrode mixture layer 22 may include a fluororesin such as polytetrafluoroethylene (PTFE) and polyvinylidene fluoride (PVdF), polyacrylonitrile (PAN), a polyimide resin, an acrylic resin, and a polyolefin resin. With these resins, a cellulose derivative such as carboxymethyl cellulose (CMC) or a salt thereof, polyethylene oxide (PEO), and the like may be used in combination.

[Negative Electrode]

The negative electrode 30 has a negative electrode core 31 and a negative electrode mixture layer formed on a surface of the negative electrode core 31. For the negative electrode core 31, a foil of a metal stable within a potential range of the negative electrode 30, such as copper may be used. The negative electrode mixture layer includes a negative electrode active material and a binder, and is preferably provided on both surfaces of the negative electrode core 31. The negative electrode 30 may be produced by, for example, applying a negative electrode mixture slurry including the negative electrode active material, a conductive agent, the binder, and the like on the surface of the negative electrode core 31, and drying and subsequently compressing the applied film to form the negative electrode mixture layer on both the surfaces of the negative electrode core 31.

The negative electrode active material is not particularly limited as long as it may reversibly occlude and release lithium ions, and examples thereof include: a carbon material such as artificial graphite, natural graphite, amorphous-coated graphite, and non-crystalline carbon (low-crystalline carbon and amorphous carbon, for example, furnace black, Ketjenblack, channel black, thermal black, acetylene black, carbon nanotube, and graphene); a non-carbon material such as SiO; and a mixture of the carbon material and the non-carbon material. In the case of the mixture of the carbon material and SiO, an amount of SiO is preferably within a range of, for example, 4 to 70% based on a total amount of the mixture. SiO may contain Li in advance, and a rate of Si in the Li-Si-O compound is preferably 10 to 80%. A particle surface of SiO is preferably coated with non-crystalline carbon (such as low-crystalline carbon and amorphous carbon).

For the conductive agent included in the negative electrode mixture layer, a carbon material such as carbon black, acetylene black, Ketjenblack, and graphite may be used similar to that in the positive electrode 20. For the binder included in the negative electrode mixture layer, a fluororesin, PAN, a polyimide, an acrylic resin, a polyolefin, and the like may be used similar to that in the positive electrode 20, but styrene-butadiene rubber (SBR) is preferably used. The negative electrode mixture layer preferably further includes CMC or a salt thereof, polyacrylic acid (PAA) or a salt thereof, polyvinyl alcohol (PVA), and the like. Among them, SBR; and CMC or a salt thereof, or PAA or a salt thereof are preferably used in combination.

[Separator]

For the separator 40, a porous sheet having an ion permeation property and an insulation property, and the like is used, for example. Specific examples of the porous sheet include a fine porous thin film, a woven fabric, and a nonwoven fabric. As a material for the separator 40, an olefinic resin such as polyethylene (PE) and polypropylene (PP), cellulose, and the like are preferable. The separator 40 may be a multilayer such as, for example, PP layer / PE layer / PP layer. The thickness of the separator 40 is preferably within a range of, for example, 5 to 30 $\mu$m. In the case of PP layer / PE layer / PP layer, the thickness of the PP layer is preferably within a range of 2 to 10 $\mu$m, and the thickness of the PE layer is preferably within a range of 2 to 10 $\mu$m.

A heat-resistant layer is preferably disposed on at least one or more positions of on the separator 40 (one surface or both surfaces), on the positive electrode 20 (one surface or both surfaces), and on the negative electrode 30 (one surface or both surfaces). The heat-resistant layer includes a filler and a binder. Examples of the filler include boehmite (alpha alumina), titania (rutile type or anatase type; in the case of the anatase type, the heat-resistant layer is disposed so as not to be contacted with the negative electrode), zirconia, magnesia, aluminum hydroxide, magnesium hydroxide, and zinc hydroxide. Examples of the binder include an acrylic resin, an aramid, SBR, and PTFE. The content of the binder is preferably within a range of 2 to 30 mass% based on a total amount of the heat-resistant layer. The thickness of the heat-resistant layer is preferably within a range of, for example, 2 to 12 $\mu$m.

[Non-Aqueous Electrolyte]

The non-aqueous electrolyte includes a non-aqueous solvent and an electrolyte salt dissolved in the non-aqueous solvent. The non-aqueous electrolyte is not limited to a liquid electrolyte (non-aqueous electrolyte liquid), and may be a solid electrolyte using a gel polymer or the like. For the non-aqueous solvent, esters, ethers, nitriles such as acetonitrile, amides such as dimethylformamide, a mixed solvent of two or more thereof, and the like may be used, for example. The non-aqueous solvent may contain a halogen-substituted solvent in which at least some hydrogens in these solvents are substituted with halogen atoms such as fluorine.

Examples of the esters include: cyclic carbonates such as ethylene carbonate (EC), propylene carbonate (PC), and butylene carbonate; chain carbonates such as dimethyl carbonate (DMC), ethyl methyl carbonate (EMC), dimethyl carbonate (DMC), methyl propyl carbonate, ethyl propyl carbonate, and methyl isopropyl carbonate; cyclic carboxylates such as $\gamma$-butyrolactone (GBL) and $\gamma$-valerolactone (GVL); and chain carboxylates such as methyl acetate, ethyl acetate, propyl acetate, methyl propionate (MP), ethyl propionate, and $\gamma$-butyrolactone.

Examples of the ethers include: cyclic ether such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether, and the like. For the halogen-substituted solvent, a fluorinated cyclic carbonate such as fluoroethylene carbonate (FEC), a fluorinated chain carbonate, a fluorinated chain carboxylate such as methyl fluoropropionate (FMP), and the like are preferably used.

The electrolyte salt is preferably a lithium salt. Examples of the lithium salt include $LiBF_4$, $LiClO_4$, $LiPF_6$, $LiAsF_6$, $LiSbF_6$, $LiAlCl_4$, LiSCN, $LiCF_3SO_3$, $LiCF_3CO_2$, $Li(P(C_2O_4)F_4)$, $LiPF_{6-x}(C_nF_{2n+1})_x$ (1 < x < 6, n represents 1 or 2), $LiB_{10}Cl_{10}$, LiCl, LiBr, LiI, lithium chloroborane, a lithium lower aliphatic carboxylate, borate salts such as $Li_2B_4O_7$ and $Li(B(C_2O_4)F_2)$, and imide salts such as $LiN(SO_2CF_3)_2$ and $LiN(C_1F_{21+1}SO_2)(C_mF_{2m+1}SO_2)$ {1 and m represent integers of 0 or more}. As the lithium salt, one of them may be used singly, and a plurality types thereof may be mixed to be used. Among them, $LiPF_6$ is preferably used from the viewpoints of ion conductivity, electrochemical stability, and the like. A concentration of the lithium salt is preferably set to be 0.8 to 1.8 mol per 1 L of the non-aqueous solvent.

EXAMPLES

Hereinafter, the present disclosure will be further described with Examples, but the present disclosure is not limited to these Examples.

<Example 1>

[Production of Positive Electrode]

A lithium-transition metal composite oxide represented by the general formula $LiNi_{0.70}Co_{0.25}AL_{0.05}O_2$ was used as a positive electrode active material. The positive electrode active material, acetylene black, and polyvinylidene fluoride were mixed at a solid-content mass ratio of 98:1:1, and N-methyl-2-pyrrolidone (NMP) was used as a dispersion medium to prepare a positive electrode mixture slurry. A metal foil containing metal elements of Al: 93.4 mass%, Mn: 0.6 mass%, Cu: 4.5 mass%, and Mg: 1.5 mass%, having a thermal conductivity of 151 W/m·K, and having a thickness of 15 $\mu$m was used as a positive electrode core. Then, the positive electrode mixture slurry was applied on both surfaces of the positive electrode core, the applied film was dried and compressed, and then cut to a predetermined electrode size to obtain a positive electrode in which the positive electrode mixture layer was formed on both the surfaces of the positive electrode core.

[Production of Negative Electrode]

A graphite was used as a negative electrode active material. The negative electrode active material, sodium carboxymethyl cellulose (CMC-Na), and styrene-butadiene rubber (SBR) were mixed at a predetermined solid-content mass ratio, and water was used as a dispersion medium to prepare a negative electrode mixture slurry. Then, the negative electrode mixture slurry was applied on both surfaces of a negative electrode core made of copper foil, the applied film was dried and compressed with a predetermined force, and then cut to a predetermined electrode size to obtain a negative electrode in which the negative electrode mixture layer was formed on both the surfaces of the negative electrode core.

[Preparation of Non-Aqueous Electrolyte Liquid]

Ethylene carbonate (EC), ethyl methyl carbonate (EMC), and dimethyl carbonate (DMC) were mixed at a volume ratio of 3:3:4 (25°C, 1 atm). Into this mixed solvent, $LiPF_6$ was added to be a concentration at 1.15 M to obtain the non-aqueous electrolyte liquid.

[Production of Test Cell]

An aluminum lead was attached to the core exposed part of the positive electrode, and a nickel lead was attached to the core exposed part of the negative electrode. The positive electrode and negative electrode were spirally wound with a separator interposed therebetween, and then press-formed in the radial direction to produce a flat, wound electrode assembly. This electrode assembly was housed in an outer housing body composed of an aluminum laminated sheet, the above non-aqueous electrolyte was injected thereinto, and an opening of the outer housing body was sealed to obtain a test cell (non-aqueous electrolyte secondary battery).

On the obtained test cell, performance evaluations (a resistance increasing rate in a high-load charge-discharge test and a maximum attained temperature in a nail piercing test) were performed with the following methods. The evaluation results are shown in Tables.

[High-Load Charge-Discharge Test (Evaluation of Resistance Increasing Rate)]

Under an environment at 25°C, the test cell was charged at 0.1 It until 4.2 V, then discharged at 0.1 It until 2.5 V, and then charged until 3.7 V. With this voltage, the test cell was charged at 2.5 It for 240 seconds, and then discharged at 30 It for 20 seconds. A rest time between the charge and the discharge was 120 seconds. This charge-discharge cycle was performed with 1000 cycles. A battery resistance after the 1st cycle and a battery resistance after the 1000th cycle were calculated as a relative value to specify this value as a resistance increasing rate in the charge-discharge cycle.

[Nail Piercing Test (Evaluation of Maximum Attained Temperature)]

(1) Under an environment of 25°C, the test cell was charged at a constant current of 0.1 It until a battery voltage reached 4.2 V, and subsequently charged at a constant voltage until a current value reached 0.05 It.
(2) Under an environment at 60°C, a tip of a round nail having a diameter of 3 mmφ was contacted with a center of the side face of the cell charged in (1), the test cell was pierced with the round nail in the thickness direction of the battery at a rate of 10 mm/sec, and the piercing with the round nail was stopped when the round nail completely penetrated the battery.
(3) A cell temperature at a position distanced with 10 mm from the center of the side face of the cell pierced with the round nail was measured to determine the maximum attained temperature.

<Examples 2 to 44 and Comparative Examples 1 and 2>

Positive electrodes and test cells were produced to perform the performance evaluations of the test cells in a manner similar to that in Example 1 with changing the composition of the positive electrode core (thermal conductivity), the composition of the positive electrode active material, or the circularity of the positive electrode active material as shown in Tables 1 to 4.

[Table 1]

EP 4 099 430 A1

| | Elemental composition of positive electrode core /% | | | | | | | | | | Thermal conductivity of positive electrode core (W/m·K[25°C]) | Positive electrode active material | Circularity | Resistance increasing rate | Maximum attained temperature /°C |
|---|---|---|---|---|---|---|---|---|---|---|---|---|---|---|---|
| | Al | Mn | Cu | Mg | Zn | Si | Cr | Ti | Fe | Ni | | | | | |
| Comparative Example 1 | 98.75 | 1.2 | 0.05 | — | — | — | — | — | — | — | 193 | $NixCoyAlzO_2$ x:y:z=70:25:5 | 0.95 | 117 | 260 |
| Comparative Example 2 | 8.1 | 0.13 | — | 90.77 | 1 | — | — | — | — | — | 45.8 | $NixCoyAlzO_2$ x:y:z=65:30:5 | 0.95 | 200 | 130 |
| Example 1 | 93.4 | 0.6 | 4.5 | 1.5 | — | — | — | — | — | — | 151 | $NixCoyAlzO_2$ x:y:z=70:25:5 | 0.95 | 119 | 197 |
| Example 2 | 93.4 | 0.7 | 4.4 | 1.5 | — | — | — | — | — | — | 120 | $NixCoyAlzO_2$ x:y:z=82:15:3 | 0.95 | 131 | 164 |
| Example 3 | 95 | 0.4 | — | 4.5 | — | — | 0.1 | — | — | — | 120 | $NixCoyMnzO_2$ x:y:z=85:5:10 | 0.95 | 131 | 155 |
| Example 4 | 93.3 | 0.1 | 0.1 | 5.6 | 0.1 | 0.3 | 0.1 | — | 0.4 | — | 112 | $NixCoyMnzO_2$ x:y:z=85:5:10 | 0.95 | 135 | 150 |
| Example 5 | 9.7 | 0.5 | — | 88.8 | 1 | — | — | — | — | — | 72 | $NixCoyAlzO_2$ x:y:z=94:3:3 | 0.95 | 138 | 140 |
| Example 6 | 9.74 | 0.13 | — | 89.13 | 1 | — | — | — | — | — | 53.6 | $NiO_2$ | 0.95 | 140 | 135 |

[Table 2]

EP 4 099 430 A1

| | Elemental composition of positive electrode core /% | | | | | | | | | | Thermal conductivity of positive electrode core (W/m·K [25°C]) | Positive electrode active material | Circularity of secondary particles | Circularity of single particles | Circularity to thermal conductivity of core | Resistance increasing rate | Maximum attained temperature /°C |
|---|---|---|---|---|---|---|---|---|---|---|---|---|---|---|---|---|---|
| | Al | Mn | Cu | Mg | Zn | Si | Cr | Ti | Fe | Ni | | | | | | | |
| Example 7 | 93.4 | 0.6 | 4.5 | 1.5 | — | — | — | — | — | — | 151 | NixCoyAlzO2 x:y:z=70:25:5 | — | 0.78 | 0.005166 | 118 | 188 |
| Example 8 | 93.4 | 0.6 | 4.5 | 1.5 | — | — | — | — | — | — | 151 | NixCoyAlzO2 x:y:z=70:25:5 | 0.995 | — | 0.006589 | 120 | 198 |
| Example 9 | 93.4 | 0.6 | 4.5 | 1.5 | — | — | — | — | — | — | 151 | NixCoyAlzO2 x:y:z=70:25:5 | — | 0.6 | 0.003974 | 117 | 194 |
| Example 10 | 93.4 | 0.6 | 4.5 | 1.5 | — | — | — | — | — | — | 151 | NixCoyAlzO2 x:y:z=70:25:5 | — | 0.43 | 0.002980 | 116 | 199 |
| Example 11 | 95.1 | 0.4 | — | 4.5 | — | — | — | — | — | — | 120 | NixCoyMnzO2 x:y:z=85:5:10 | — | 0.78 | 0.006500 | 130 | 148 |
| Example 12 | 95.1 | 0.4 | — | 4.5 | — | — | — | — | — | — | 120 | NixCoyMnzO2 x:y:z=85:5:10 | 0.993 | — | 0.008275 | 132 | 156 |
| Example 13 | 95.1 | 0.4 | — | 4.5 | — | — | — | — | — | — | 120 | NixCoyMnzO2 x:y:z=85:5:10 | — | 0.55 | 0.004583 | 129 | 153 |
| Example 14 | 95.1 | 0.4 | — | 4.5 | — | — | — | — | — | — | 120 | NixCoyMnzO2 x:y:z=85:5:10 | — | 0.45 | 0.003750 | 128 | 157 |
| Example 15 | 93.3 | 0.1 | 0.1 | 5.6 | 0.1 | 0.3 | 0.1 | — | 0.4 | — | 112 | NixCoyMnzO2 x:y:z=85:5:10 | — | 0.75 | 0.006696 | 134 | 143 |
| Example 16 | 93.3 | 0.1 | 0.1 | 5.6 | 0.1 | 0.3 | 0.1 | — | 0.4 | — | 112 | NixCoyMnzO2 x:y:z=85:5:10 | 0.99 | — | 0.008839 | 136 | 151 |
| Example 17 | 93.3 | 0.1 | 0.1 | 5.6 | 0.1 | 0.3 | 0.1 | — | 0.4 | — | 112 | NixCoyMnzO2 x:y:z=85:5:10 | — | 0.5 | 0.004464 | 133 | 148 |
| Example 18 | 93.3 | 0.1 | 0.1 | 5.6 | 0.1 | 0.3 | 0.1 | — | 0.4 | — | 112 | NixCoyMnzO2 x:y:z=85:5:10 | — | 0.4 | 0.003571 | 132 | 152 |
| Example 19 | 9.7 | 0.5 | — | 88.8 | 1 | — | — | — | — | — | 72 | NixCoyAlzO2 x:y:z=94:3:3 | — | 0.68 | 0.009444 | 137 | 134 |
| Example 20 | 9.7 | 0.5 | — | 88.8 | 1 | — | — | — | — | — | 72 | NixCoyAlzO2 x:y:z=94:3:3 | 0.985 | 0.985 | 0.013681 | 139 | 141 |
| Example 21 | 9.7 | 0.5 | — | 88.8 | 1 | — | — | — | — | — | 72 | NixCoyAlzO2 x:y:z=94:3:3 | — | 0.48 | 0.006667 | 136 | 138 |
| Example 22 | 9.7 | 0.5 | — | 88.8 | 1 | — | — | — | — | — | 72 | NixCoyAlzO2 x:y:z=94:3:3 | — | 0.35 | 0.004861 | 135 | 142 |
| Example 23 | 9.74 | 0.13 | — | 89.13 | 1 | — | — | — | — | — | 53.6 | NiO2 | — | 0.6 | 0.011194 | 139 | 129 |
| Example 24 | 9.74 | 0.13 | — | 89.13 | 1 | — | — | — | — | — | 53.6 | NiO2 | 0.982 | — | 0.018321 | 141 | 136 |
| Example 25 | 9.74 | 0.13 | — | 89.13 | 1 | — | — | — | — | — | 53.6 | NiO2 | — | 0.45 | 0.008396 | 138 | 133 |
| Example 26 | 9.74 | 0.13 | — | 89.13 | 1 | — | — | — | — | — | 53.6 | NiO2 | — | 0.3 | 0.005597 | 136 | 137 |

[Table 3]

| | Elemental composition of positive electrode core /% | | | | | | | | | | Thermal conductivity of positive electrode core (W/m·K[25°C]) | Positive electrode active material | Circularity of secondary particles | Circularity of single particles | Mixing ratio single particles : secondary particles | Resistance increasing rate | Maximum attained temperature /°C |
|---|---|---|---|---|---|---|---|---|---|---|---|---|---|---|---|---|---|
| | Al | Mn | Cu | Mg | Zn | Si | Cr | Ti | Fe | Ni | | | | | | | |
| Example 27 | 93.3 | 0.1 | 0.1 | 5.6 | 0.1 | 0.3 | 0.1 | — | 0.4 | — | 112 | $Ni_xCo_yMn_zO_2$ x:y:z=85:5:10 | — | 0.75 | — | 134 | 143 |
| Example 28 | 93.3 | 0.1 | 0.1 | 5.6 | 0.1 | 0.3 | 0.1 | — | 0.4 | — | 112 | $Ni_xCo_yMn_zO_2$ x:y:z=85:5:10 | 0.99 | — | — | 136 | 151 |
| Example 29 | 93.3 | 0.1 | 0.1 | 5.6 | 0.1 | 0.3 | 0.1 | — | 0.4 | — | 112 | $Ni_xCo_yMn_zO_2$ x:y:z=85:5:10 | 0.99 | 0.75 | 1:9 | 132 | 142 |
| Example 30 | 93.3 | 0.1 | 0.1 | 5.6 | 0.1 | 0.3 | 0.1 | — | 0.4 | — | 112 | $Ni_xCo_yMn_zO_2$ x:y:z=85:5:10 | 0.99 | 0.75 | 2:8 | 129 | 139 |
| Example 31 | 93.3 | 0.1 | 0.1 | 5.6 | 0.1 | 0.3 | 0.1 | — | 0.4 | — | 112 | $Ni_xCo_yMn_zO_2$ x:y:z=85:5:10 | 0.99 | 0.75 | 3:7 | 127 | 136 |
| Example 32 | 93.3 | 0.1 | 0.1 | 5.6 | 0.1 | 0.3 | 0.1 | — | 0.4 | — | 112 | $Ni_xCo_yMn_zO_2$ x:y:z=85:5:10 | 0.99 | 0.75 | 4:6 | 125 | 134 |
| Example 33 | 93.3 | 0.1 | 0.1 | 5.6 | 0.1 | 0.3 | 0.1 | — | 0.4 | — | 112 | $Ni_xCo_yMn_zO_2$ x:y:z=85:5:10 | 0.99 | 0.75 | 5:5 | 124 | 133 |
| Example 34 | 93.3 | 0.1 | 0.1 | 5.6 | 0.1 | 0.3 | 0.1 | — | 0.4 | — | 112 | $Ni_xCo_yMn_zO_2$ x:y:z=85:5:10 | 0.99 | 0.75 | 6:4 | 126 | 134 |
| Example 35 | 93.3 | 0.1 | 0.1 | 5.6 | 0.1 | 0.3 | 0.1 | — | 0.4 | — | 112 | $Ni_xCo_yMn_zO_2$ x:y:z=85:5:10 | 0.99 | 0.75 | 7:3 | 133 | 140 |

[Table 4]

EP 4 099 430 A1

13

| Elemental composition of positive electrode core /% | | | | | | | | | | Thermal conductivity of positive electrode core (W/m·K[25°C]) | Positive electrode active material | Circularity of secondary particles | Circularity of single particles | Mixing ratio single particles : secondary particles | Resistance increasing rate | Maximum attained temperature /°C |
| | Al | Mn | Cu | Mg | Zn | Si | Cr | Ti | Fe | Ni | | | | | | | |
|---|---|---|---|---|---|---|---|---|---|---|---|---|---|---|---|---|---|
| Example 36 | 93.3 | 0.1 | 0.1 | 5.6 | 0.1 | 0.3 | 0.1 | — | 0.4 | — | 112 | NixCoyMnzO₂ x:y:z=87:3:10 | — | 0.73 | — | 133 | 142 |
| Example 37 | 93.3 | 0.1 | 0.1 | 5.6 | 0.1 | 0.3 | 0.1 | — | 0.4 | — | 112 | NixCoyMnzO₂ x:y:z=87:3:10 | 0.98 | — | — | 134 | 150 |
| Example 38 | 93.3 | 0.1 | 0.1 | 5.6 | 0.1 | 0.3 | 0.1 | — | 0.4 | — | 112 | NixCoyMnzO₂ x:y:z=87:3:10 | 0.98 | 0.73 | 1:9 | 129 | 141 |
| Example 39 | 93.3 | 0.1 | 0.1 | 5.6 | 0.1 | 0.3 | 0.1 | — | 0.4 | — | 112 | NixCoyMnzO₂ x:y:z=87:3:10 | 0.98 | 0.73 | 2:8 | 127 | 138 |
| Example 40 | 93.3 | 0.1 | 0.1 | 5.6 | 0.1 | 0.3 | 0.1 | — | 0.4 | — | 112 | NixCoyMnzO₂ x:y:z=87:3:10 | 0.98 | 0.73 | 3:7 | 125 | 135 |
| Example 41 | 93.3 | 0.1 | 0.1 | 5.6 | 0.1 | 0.3 | 0.1 | — | 0.4 | — | 112 | NixCoyMnzO₂ x:y:z=87:3:10 | 0.98 | 0.73 | 4:6 | 122 | 133 |
| Example 42 | 93.3 | 0.1 | 0.1 | 5.6 | 0.1 | 0.3 | 0.1 | — | 0.4 | — | 112 | NixCoyMnzO₂ x:y:z=87:3:10 | 0.98 | 0.73 | 5:5 | 123 | 132 |
| Example 43 | 93.3 | 0.1 | 0.1 | 5.6 | 0.1 | 0.3 | 0.1 | — | 0.4 | — | 112 | NixCoyMnzO₂ x:y:z=87:3:10 | 0.98 | 0.73 | 6:4 | 125 | 135 |
| Example 44 | 93.3 | 0.1 | 0.1 | 5.6 | 0.1 | 0.3 | 0.1 | — | 0.4 | — | 112 | NixCoyMnzO₂ x:y:z=87:3:10 | 0.98 | 0.73 | 7:3 | 132 | 142 |

As shown in Tables 1 to 4, any of test cells in Examples has a lower maximum attained temperature in the nail piercing test than the test cell in Comparative Example 1, and is found to inhibit the heat generation. In addition, any of the test cells in Examples has a lower resistance increasing rate than the test cell in Comparative Example 2. That is, the test cell in Example enables to lower the battery resistance and to inhibit the heat generation of the battery with the internal short-circuit, and may achieve both the characteristics.

REFERENCE SIGNS LIST

10 Non-aqueous electrolyte secondary battery
11 Electrode assembly
12 Positive electrode terminal
13 Negative electrode terminal
14 Outer housing can
15 Sealing plate
16 Liquid injecting part
17 Gas discharging vent
20 Positive electrode
21 Positive electrode core
22 Positive electrode mixture layer
23, 33 Core exposed part
24 Positive electrode active material
25 Positive electrode current collector
30 Negative electrode
31 Negative electrode core
35 Negative electrode current collector
40 Separator
100 Nail

**Claims**

1. A positive electrode for a non-aqueous electrolyte secondary battery, comprising:

   a core; and
   a mixture layer formed on a surface of the core, wherein
   the mixture layer includes a positive electrode active material containing, as a main component, a lithium-transition metal composite oxide in which a proportion of Ni based on a total number of moles of metal elements excluding Li is 70 mol% or more, and
   the core has a thermal conductivity X of 50 to 155 W/m·K (25°C).

2. The positive electrode for a non-aqueous electrolyte secondary battery according to claim 1, wherein an upper limit Y1 and a lower limit Y2 of a median value Y in a circularity distribution of the lithium-transition metal composite oxide with respect to the thermal conductivity X of the core satisfy conditions of the following (Formula 1) and (Formula 2), respectively:

$$\text{(Formula 1) } Y1 = 0.9322(X^{-0.987})$$

$$\text{(Formula 2) } Y2 = 0.1613(X^{-0.746}) - 0.0005.$$

3. The positive electrode for a non-aqueous electrolyte secondary battery according to claim 1 or 2, wherein the core contains Mg, and a content of Mg is 1.5 to 90 mass%.

4. The positive electrode for a non-aqueous electrolyte secondary battery according to any one of claims 1 to 3, wherein the lithium-transition metal composite oxide includes single particles each constituted by one primary particle or constituted by aggregation of not more than five primary particles.

5. The positive electrode for a non-aqueous electrolyte secondary battery according to claim 4, wherein

the lithium-transition metal composite oxide further includes secondary particles each constituted by aggregation of primary particles having a smaller particle diameter than the primary particles of the single particles, and a mass ratio between the single particles and the secondary particles is 2:8 to 6:4.

6. The positive electrode for a non-aqueous electrolyte secondary battery according to any one of claims 1 to 3, wherein

the lithium-transition metal composite oxide is of single particles each constituted by one primary particle or constituted by aggregation of not more than five primary particles,
the single particles include first single particles having a circularity of 0.9 or higher and second single particles having a circularity of lower than 0.9, and
a mass ratio between the first single particles and the second single particles is 2:8 to 6:4.

7. A non-aqueous electrolyte secondary battery, comprising:

the positive electrode according to any one of claims 1 to 6;
a negative electrode;
a separator interposed between the positive electrode and the negative electrode; and
a non-aqueous electrolyte.

# Figure 1

# Figure 2

Figure 3A

Figure 3B

# Figure 4

CIRCULARITY OF POSITIVE ELECTRODE ACTIVE MATERIAL
TO THERMAL CONDUCTIVITY OF POSITIVE ELECTRODE CORE

$Y1=0.9322X^{-0.987}$

$Y2=0.1613X^{-0.746}-0.0005$

THERMAL CONDUCTIVITY OF POSITIVE ELECTRODE CORE
$(W/m \cdot K \ [25°C])$

## INTERNATIONAL SEARCH REPORT

| International application No. |
| --- |
| PCT/JP2021/001386 |

**A. CLASSIFICATION OF SUBJECT MATTER**
H01M 4/131(2010.01)i; H01M 4/525(2010.01)i; H01M 4/66(2006.01)i
FI: H01M4/131; H01M4/525; H01M4/66 A

According to International Patent Classification (IPC) or to both national classification and IPC

**B. FIELDS SEARCHED**

Minimum documentation searched (classification system followed by classification symbols)
H01M4/131; H01M4/525; H01M4/66

| Documentation searched other than minimum documentation to the extent that such documents are included in the fields searched | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2019-83138 A (TOYOTA MOTOR CORP.) 30 May 2019 (2019-05-30) claims, paragraphs [0006], [0009]-[0044], example 6 | 1, 3-4, 7<br>2, 5-6 |
| A | JP 6600734 B1 (SUMITOMO CHEMICAL CO., LTD.) 30 October 2019 (2019-10-30) | 1-7 |
| A | JP 2000-277087 A (HITACHI, LTD.) 06 October 2000 (2000-10-06) | 1-7 |

| ☐ Further documents are listed in the continuation of Box C. | ☒ See patent family annex. |
| --- | --- |

| \* Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 09 March 2021 (09.03.2021) | 23 March 2021 (23.03.2021) |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

| International application No. |
| --- |
| PCT/JP2021/001386 |

| Patent Documents referred in the Report | Publication Date | Patent Family | Publication Date |
| --- | --- | --- | --- |
| JP 2019-83138 A | 30 May 2019 | (Family: none) | |
| JP 6600734 B1 | 30 Oct. 2019 | JP 2020-87879 A | |
| | | WO 2020/110486 A1 | |
| JP 2000-277087 A | 06 Oct. 2000 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 4953631 B